# EUROPÄISCHE PATENTSCHRIFT

(11) **EP 3 096 950 B1**
(45) Veröffentlichungstag und Bekanntmachung des Hinweises auf die Patenterteilung: **30.05.2018**
(21) Anmeldenummer: 14806193.0
(22) Anmeldetag: 06.11.2014
(51) Int. Cl.: B32B 27/14, B32B 5/16, B32B 9/02, B32B 27/40, B32B 3/30, B63B 17/00, B63B 29/00

(54) **BOOTSBAUELEMENT**
BOAT COMPONENT
ÉLÉMENT DE CONSTRUCTION DE BATEAUX

(30) Priorität: 22.01.2014 DE 102014100676
(43) Veröffentlichungstag der Anmeldung: 30.11.2016
(73) Patentinhaber: Wolz Nautic GmbH & Co. Kg, 97253 Gaukönigshofen (DE)
(72) Erfinder: WOLZ, Andreas, 97082 Würzburg (DE); WOLZ, Michael, 97253 Gaukönigshofen (DE)
(74) Vertreter: advotec.
(86) Internationale Anmeldenummer: PCT/EP2014/073864
(87) Internationale Veröffentlichungsnummer: WO 2015/110194

(56) Entgegenhaltungen:
- EP-A1- 2 172 323
- EP-A1- 2 458 108
- WO-A1-2011/149370
- DATABASE WPI Week 199119 Thomson Scientific, London, GB; AN 1991-138403 XP002737339, & NL 8 902 394 A (BOLIDT KUNSTSTOFTOE) 16. April 1991 (1991-04-16) & NL 8 902 394 A (BOLIDT KUNSTSTOFTOEPASSING B V) 16. April 1991 (1991-04-16)

## Beschreibung

Die Erfindung betrifft ein Bootsbauelement zur Verwendung insbesondere im Jachtbau nach dem Oberbegriff des Anspruchs 1.

Gattungsgemäße Bootsbauelemente finden im Bootsbau, insbesondere im Jachtbau, breite Verwendung. Beispielsweise Handläufe und Brüstungen auf Booten werden aus diesen bekannten Bootsbauelementen hergestellt. Charakteristisch dabei ist es, dass die Bootsbauelemente formelastisch gebogen werden können. Dies erlaubt die Befestigung der Bootsbauelemente in einer gebogenen Form an Bord der Boote. Weiter ist es charakteristisch für die bekannten Bootsbauelemente, dass diese aus einem wasserresistenten Material, insbesondere aus einem salzwasserfesten Material, hergestellt sind. Nur auf diese Weise wird die notwendige Haltbarkeit des Bootsbauelements entsprechend der Lebensdauer eines Bootes gewährleistet.

Üblicherweise werden die bekannten Bootsbauelemente aus geeignetem Holz hergestellt. Der Werkstoff Holz hat dabei die Eigenschaft, dass er in gewissem Maße formelastisch ist und entsprechend in Form gebracht werden kann. Außerdem weisen geeignete Holzarten, beispielsweise Teak, die notwendigen wasserresistenten Eigenschaften auf.

Nachteilig an dem Werkstoff Holz zur Herstellung der Bootsbauelemente ist es, dass das Holz hinsichtlich seiner Formelastizität relativ begrenzt ist. Somit müssen aufwendige Herstellungsverfahren eingesetzt werden, um das Holz in die gewünschte Form zu bringen. Außerdem sind die geeigneten wasserresistenten Holzsorten relativ teuer und zeichnen sich durch eine eher unerwünschte hohe Steifigkeit aus. Weiter nachteilig an dem Werkstoff Holz ist, dass dieser eine hohe spezifische Dichte aufweist, so dass die bekannten Bootsbauelemente ein relativ hohes Gewicht aufweisen. Dabei besteht im Bootsbau das grundsätzliche Ziel Gewicht einzusparen, um die Boote entsprechend leichter und schneller bauen zu können, um zugleich geringere Motorisierungen vorsehen zu müssen.

Aus der WO 2011/149370 A1 ist ein Bauteil mit einem Kern aus Korkmaterial und einer Kunststoffhaut bekannt. Das Korkmaterial weist dabei eine Dichte von lediglich 60kg/m3 auf und ist deshalb für die Verwendung in Feuchtbereichen ungeeignet.

NL 8902394 A offenbart auch ein Bootsbauelement aus einem Korkverbundmaterial.

EP 2 172 323 A1 offenbart ein Korkverbundmaterial enthaltend eine Schicht aus agglomeriertem gepresstem Kork und eine Schicht aus thermoplastischem Harz.

Ausgehend von diesem Stand der Technik ist es deshalb Aufgabe der vorliegenden Erfindung, ein neues Bootsbauelement vorzuschlagen, dass die notwendigen Eigenschaften hinsichtlich der Formelastizität und Wasserresistenz aufweist und zugleich die Probleme des vorbekannten Stands der Technik vermeidet.

Diese Aufgabe wird durch ein Bootsbauelement nach der Lehre des Anspruchs 1 gelöst.

Vorteilhafte Ausführungsformen der Erfindung sind Gegenstand der Unteransprüche.

Das erfindungsgemäße Bootsbauelement ist in der Art eines Verbundbauelements aus zumindest zwei grundsätzlich verschiedenen Komponenten aufgebaut. Zum einen weist das erfindungsgemäße Bootsbauelement einen Kern auf, der aus Korkverbundmaterial hergestellt ist. Als Korkverbundmaterial sollen dabei alle Materialien angesehen werden, die aus Korkpartikeln bestehen, die mit einer Bindungsmatrix zu einem in sich formstabilen und zugleich elastisch verformbaren Bauelement gebunden sind. Dieser aus Korkverbundmaterial bestehende Kern wird bei der Herstellung des erfindungsgemäßen Bootsbauelements in einen elastischen Kunststoffkörper eingebettet und somit zumindest bereichsweise durch den Kunststoffkörper abgedeckt. Die Abdeckung des Kerns aus Korkverbundmaterial durch den elastischen Kunststoffkörper ist dabei insbesondere an den Nutzflächen des Bootsbauelements vorzusehen, um auf diese Weise den verschleißempfindlichen Kern aus Korkverbundmaterial durch den elastischen Kunststoffkörper zu schützen.

Durch die Kombination des Kerns aus Korkverbundmaterial mit einem Überzug aus einem elastischen Kunststoffkörper wird zum einen erreicht, dass das Bootsbauelement eine insgesamt relativ geringe Dichte aufweist, da das Korkverbundmaterial für sich genommen sehr leicht ist. Außerdem wird die Elastizität des Bootsbauelements durch den Kern aus Korkverbundmaterial stark erhöht, da derartiges Korkverbundmaterial sehr gut elastisch verformbar ist. Die notwendige Oberflächenfestigkeit kann durch die Eigenschaften des elastischen Kunststoffkörpers, der als Überzug des Kerns dient, gewährleistet werden. Die Kosten für die Herstellung des Bootsbauelements sind erheblich niedriger als die Kosten zur Herstellung des gleichen Bootsbauelements aus geeignetem Holz, da das Korkverbundmaterial vergleichsweise preisgünstig ist und für die Herstellung des Überzugs nur eine relativ geringe Kunststoffmenge notwendig ist.

Für den Einsatz des Korkverbundmaterials ist eine hohe Wasserresistenz erforderlich, um es im Bereich des Bootsbaus einsetzen zu können. Erfindungsgemäß liegt das spezifische Gewicht des Korkverbundmaterials deshalb im Bereich von 150 bis 250 kg/m^{3,} um und die notwendigen Wasserresistenz zu gewährleisten.

Aus welchem Material der elastische Kunststoffkörper hergestellt ist, der den Überzug des Kerns aus Korkverbundmaterial bildet, ist grundsätzlich beliebig. Besonders geeignet sind hierbei Gießmassen auf Polyurethanbasis, die mit einem geeigneten Härter gehärtet sind. Solche Gießmassen auf Polyurethanbasis lassen sich hervorragend verarbeiten und erlauben die einfache Einbettung des Korkverbundmaterials. Außerdem verbindet sich das Material der Gießmasse sehr fest mit der Oberfläche des Korkverbundmaterials, da die Gießmasse in die offene Oberflächenstruktur des Korkverbundmaterials eindringen und sich dort verkrallen kann. Die notwendige Elastizität und Wasserresistenz weist eine Gießmasse auf Polyurethanbasis ohne Probleme auf.

Für den Einsatz des Korkverbundmaterials gibt es eine große Vielzahl von möglichen Materialien. Dabei sollte das spezifische Gewicht des Korkverbundmaterials bevorzugt im Bereich von 170 bis 210 kg/m³ liegen. Derartige Korkverbundmaterialien sind hinsichtlich ihrer Elastizität, ihres Preises und der notwendigen Wasserresistenz hervorragend geeignet um erfindungsgemäße Bootsbauelemente herzustellen.

Die Zugfestigkeit des Korkverbundmaterials sollte bevorzugt im Bereich oberhalb von 400 kPa liegen, um die notwendige Stabilität des Bootsbauelements in seinem Kern auch bei stärkeren Verformungen zu gewährleisten.

Weiterhin ist es besonders vorteilhaft, wenn die Kompressibilität des Korkverbundmaterials im Bereich von 20 bis 40 % liegt, um auch kleinere Biegeradien des Bootsbauelements realisieren zu können. Wird das Bootsbauelement um einen Radius gebogen, so wird das Material im Kern auf der Außenseite stark gestreckt und auf der Innenseite stark komprimiert. Um diese Belastung ertragen zu können, sollte das Korkverbundmaterial eine entsprechende Kompressibilität aufweisen.

Die Eigenschaften des Kernmaterials werden insbesondere auch durch die Größe der Korkpartikel im Korkverbundmaterial bestimmt. Um einerseits eine ausreichende Verkrallung des den Überzug bildenden Kunststoffkörpers an der Oberfläche des Kernmaterials zu gewährleisten und andererseits eine ausreichende mechanische Stabilität zu erreichen, sollten die Korkpartikel des Korkverbundmaterials bevorzugt einen Durchmesser im Bereich von 1 bis 10 mm, insbesondere im Bereich von 2 bis 5 mm, aufweisen.

Sehr gute mechanische Eigenschaften des Korkverbundmaterials ergeben sich, wenn die Bindungsmatrix aus Polyurethan besteht. Die Verwendung ist von Polyurethan in der Bindungsmatrix des Korkverbundmaterials insbesondere auch dann von Vorteil, wenn auch der den Überzug bildende Kunststoffkörper aus Polyurethan besteht, da dann die Bindungsmatrix des Korkverbundmaterials und der den Überzug bildende Kunststoffkörper aus gleichartigem Kunststoff bestehen und somit auch chemische Bindungen relativ leicht herstellbar sind.

Das erfindungsgemäße Bootsbauelement soll insbesondere aus Holz hergestellte Bootsbauelemente im Bootsbau ersetzen. Um eine dem Holz möglichst entsprechende Oberflächenoptik zu erzeugen, sollte das Bootsbauelement zumindest bereichsweise eine Oberfläche mit Riefenstruktur aufweisen. Ist zugleich gewährleistet, dass der den Überzug des Kerns bildende Kunststoffkörper eine, bekannten Holzsorten entsprechende, Farbgebung aufweist, so kann eine den bisher üblichen, nämlich aus Holz hergestellten Bootsbauelementen, weitgehend entsprechende Optik gewährleistet werden.

Um die gewünschte Riefenstruktur des erfindungsgemäßen Bootsbauelements herstellen zu können, ist es besonders vorteilhaft, wenn die Oberfläche des Bootsbauelements geschliffen wird.

Bei geeigneter Schleifcharakteristik kann die Riefenstruktur weitgehend der Faserstruktur von Holz angenähert werden, um eine entsprechende Holzfaseroptik zu realisieren.

Um die Oberfläche der Riefenstruktur vor übermäßigem Abrieb zu schützen, ist es vorteilhaft, wenn die Riefenstruktur mit einem Oberflächenschutz überzogen ist. Beispielsweise kann die Riefenstruktur mit einer Wachsschicht überzogen werden, um diese nach außenhin zu schützen.

Im Hinblick auf die gewünschte Optik, die der Optik der bekannten Holzbootsbauelemente weitgehend angenähert werden soll, ist es besonders vorteilhaft, wenn zumindest eine Sichtseite des Bootsbauelements eine konvex gewölbte Außenfläche aufweist.

Eine Ausführungsform der Erfindung ist in den Zeichnungen schematisch dargestellt und wird nachfolgend beispielhaft erläutert.

Es zeigen:
- Fig. 1: ein Motorboot mit einem erfindungsgemäßen Bootsbauelement in seitlicher Ansicht;
- Fig. 2: das Motorboot gemäß Fig. 1 in Ansicht von oben;
- Fig. 3: das Bootsbauelement gemäß Fig. 1 im Querschnitt.

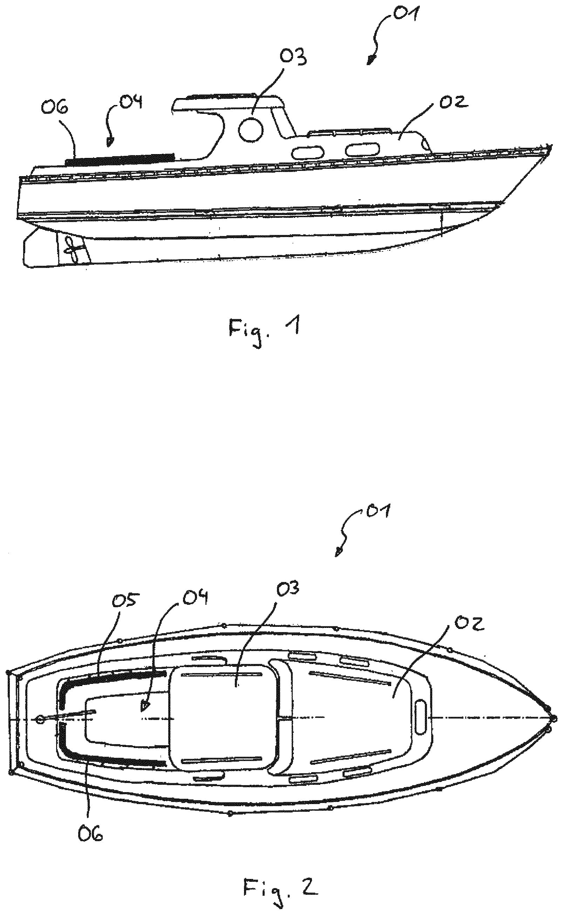

Fig. 1 zeigt ein Motorboot 01 mit einer Kabine 02, einem Ruderhaus 03 und einem offenen Sitzbereich 04.

Fig. 2 zeigt das Motorboot 01 in Ansicht von oben. An den Lehnenflächen des offenen Sitzbereichs 04 sind zwei gebogene Bootsbauelemente 05 und 06 befestigt, die der erfindungsgemäßen Konstruktion entsprechen. Die Bootsbauelemente 05 und 06 sind an mehreren Befestigungspunkten mit dem Kunststoffkörper des Motorboots 01 verbunden, um die Bootsbauelemente 05 und 06 in ihrer gebogenen Form zu halten.

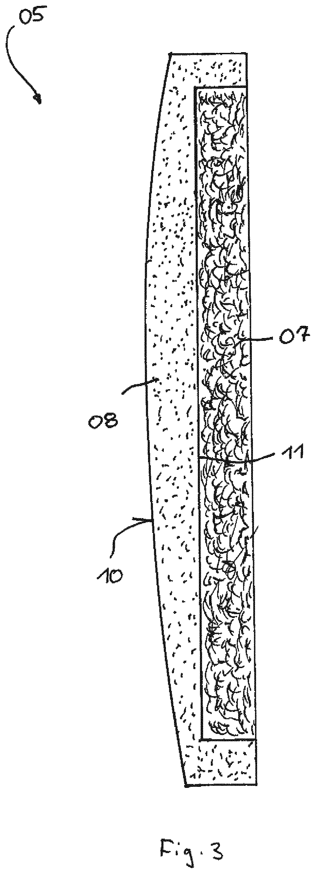

Fig. 3 zeigt den Querschnitt des Bootsbauelements 05. Das Bootsbauelement 05 weist einen Kern 07 auf, der aus einem Korkverbundmaterial besteht. Das Korkverbundmaterial des Kerns 07 besteht also aus Korkpartikeln, die mit einer Bindungsmatrix formstabil und elastisch verformbar gebunden sind. Zur Herstellung des Bootsbauelements 05 wird dieser Kern 07 in einen Kunststoffkörper 08 eingeformt. Der Kunststoffkörper 08 besteht aus einer gehärteten Gießmasse auf Polyurethanbasis. Auch die Bindungsmatrix des Kerns 07 besteht aus Polyurethan, so dass sich der Kunststoffkörper 08 und der Kern 07 an der Grenzfläche 09 chemisch miteinander verbinden, und die beiden Einzelelemente des Bootsbauelements 02 nicht nur formschlüssig sondern auch stoffschlüssig miteinander verbunden sind. Die die Sichtseite 10 bildende Oberfläche des Kunststoffkörpers 08 ist durch Schleifen mit einer Riefenstruktur versehen, so dass der Kunststoffkörper 08 an der Sichtseite 10 eine der Holzoptik entsprechende Oberflächenstruktur aufweist. Zum Schutz dieser Oberflächenstruktur wird auf der Sichtseite 10 nach dem Schleifen außerdem eine Wachsschicht angebracht.

Um das Bootsbauelement 05 bzw. 06 herzustellen, kann der Kern 07 beispielsweise in einer offenen Form befestigt werden, so dass die von der Sichtseite 10 wegweisende Oberfläche 11 in der Form aufliegt. Die offene Form wird dann mit der noch ungehärteten Gießmasse auf Polyurethanbasis ausgegossen, um den Kunststoffkörper 08 zu bilden. Sobald die den Kunststoffkörper 08 bildende Gießmasse ausgehärtet ist, kann die Sichtseite 10 dann mit einem geeigneten Schleifverfahren geschliffen werden, um die Riefenstruktur auf der Sichtseite 10 herzustellen und die konvex gewölbte Außenfläche an der Sichtseite 10 zu realisieren.

## Patentansprüche

1. Bootsbauelement (05, 06), wobei das Bootsbauelement (05, 06) in Richtung seiner Längsachse formelastisch gebogen ist, und in gebogener Form an zumindest zwei Befestigungspunkten befestigbar ist, ,
**dadurch gekennzeichnet,**
**dass** das Bootsbauelement (05, 06) einen Kern (07) aufweist, der zumindest teilweise in einen elastischen Kunststoffkörper (08) eingebettet ist, wobei der Kern (07) aus einem Korkverbundmaterial besteht, das aus Korkpartikeln und einer Bindungsmatrix hergestellt ist, und wobei das als Kern (07) verwendete Korkverbundmaterial ein spezifisches Gewicht im Bereich von 150 bis 250 kg/m³ aufweist.

2. Bootsbauelement nach Anspruch 1,
**dadurch gekennzeichnet,**
**dass** der elastische Kunststoffkörper (08) aus einer gehärteten Gießmasse auf Polyurethanbasis besteht.

3. Bootsbauelement nach Anspruch 1 oder 2,
**dadurch gekennzeichnet,**
**dass** das als Kern (07) verwendete Korkverbundmaterial ein spezifisches Gewicht im Bereich von 170 bis 210 kg/m³ aufweist.

4. Bootsbauelement nach einem der Ansprüche 1 bis 3,
**dadurch gekennzeichnet,**
**dass** die Korkpartikel des als Kern (07) verwendeten Korkverbundmaterials einen Durchmesser im Bereich von 1 bis 10 mm, insbesondere im Bereich von 2 bis 5 mm, aufweisen.

5. Bootsbauelement nach einem der Ansprüche 1 bis 4,
**dadurch gekennzeichnet,**
**dass** die Bindungsmatrix des als Kern (07) verwendeten Korkverbundmaterials aus Polyurethan besteht.

6. Bootsbauelement nach einem der Ansprüche 1 bis 5,
**dadurch gekennzeichnet,**
**dass** das Bootsbauelement (05, 06) zumindest bereichsweise eine Oberfläche mit Riefenstruktur aufweist.

7. Bootsbauelement nach einem der Ansprüche 1 bis 6,
**dadurch gekennzeichnet,**
**dass** das Bootsbauelement (05, 06) zumindest bereichsweise eine geschliffene Oberfläche aufweist.

8. Bootsbauelement nach einem der Ansprüche 1 bis 7,
**dadurch gekennzeichnet,**
**dass** die Riefenstruktur des Bootsbauelements (05, 06) der Faserstruktur von Holz entspricht.

9. Bootsbauelement nach einem der Ansprüche 1 bis 8,
**dadurch gekennzeichnet,**
**dass** die Riefenstruktur des Bootsbauelements (05, 06) mit einem Oberflächenschutz, insbesondere mit einer Wachsschicht, überzogen ist.

10. Bootsbauelement nach einem der Ansprüche 1 bis 9,
**dadurch gekennzeichnet,**
**dass** zumindest eine Sichtseite des Bootsbauelements (05, 06) eine konvex gewölbte Außenfläche aufweist.

## Claims

1. A boat component (05, 06), the boat component (05, 06) being flexibly bent in the direction of its longitudinal axis, and, in the bent shape, being attachable to at least two attachment points,
**characterised in that**
the boat component (05, 06) has a core (07) which is embedded, at least in part, in an elastic plastic body (08), the core (07) consisting of a cork composite material that is made of cork particles and of a binding matrix, and the cork composite material used as the core (07) having a specific weight in the range of 150 to 250 kg/m³.

2. The boat component according to claim 1,
**characterised in that**
the elastic plastic body (08) consists of a hardened casting compound based on polyurethane.

3. The boat component according to claim 1 or 2,
**characterised in that**
the cork composite material used as the core (07) has a specific weight in the range of 170 to 210 kg/m³.

4. The boat component according to any one of the claims 1 to 3,
**characterised in that**
the cork particles of the cork composite material used as the core (07) have a diameter in the range of 1 to 10 mm, in particular in the range of 2 to 5 mm.

5. The boat component according to any one of the claims 1 to 4,
**characterised in that**
the binding matrix of the cork composite material used as the core (07) consists of polyurethane.

6. The boat component according to any one of the claims 1 to 5,
**characterised in that**
the boat component (05, 06), at least in some areas, has a surface with a grooved structure.

7. The boat component according to any one of the claims 1 to 6,
**characterised in that**
the boat component (05, 06), at least in some areas, has a smoothed surface.

8. The boat component according to any one of the claims 1 to 7,
**characterised in that**
the grooved structure of the boat component (05, 06) corresponds to the fibre structure of wood.

9. The boat component according to any one of the claims 1 to 8,
**characterised in that**
the grooved structure of the boat component (05, 06) is coated with a surface protection, in particular with a layer of wax.

10. The boat component according to any one of the claims 1 to 9,
**characterised in that**
at least one visible face of the boat component (05, 06) has a convex outer surface.

## Revendications

1. Élément de construction (05, 06) de bateaux, l'élément de construction (05, 06) de bateaux étant arqué à élasticité de forme dans le sens de son axe longitudinal, et, sous la forme arquée, étant fixable à au moins deux points de fixation,
**caractérisé en ce que**
l'élément de construction (05, 06) de bateaux comporte un noyau (07) qui est encastré, au moins en partie, dans un corps en matière plastique (08) qui est élastique, le noyau (07) se composant d'un matériau composite en liège qui est fabriqué en des particules de liège et en une matrice de liaison, et le matériau composite en liège utilisé en tant que noyau (07) comportant un poids spécifique dans la plage de 150 à 250 kg/m³.

2. Élément de construction de bateaux selon la revendication 1,
**caractérisé en ce que**
le corps en matière plastique (08) élastique se compose d'une masse de coulée à base de polyuréthane.

3. Élément de construction de bateaux selon la revendication 1 ou 2,
**caractérisé en ce que**
le matériau composite en liège utilisé en tant que noyau (07) comporte un poids spécifique dans la plage de 170 à 210 kg/m³.

4. Élément de construction de bateaux selon l'une quelconque des revendications 1 à 3,
**caractérisé en ce que**
les particules de liège du matériau composite en liège utilisé en tant que noyau (07) comportent un diamètre dans la plage de 1 à 10 mm, en particulier dans la plage de 2 à 5 mm.

5. Élément de construction de bateaux selon l'une quelconque des revendications 1 à 4,
**caractérisé en ce que**
la matrice de liaison du matériau composite en liège utilisé en tant que noyau (07) se compose de polyuréthane.

6. Élément de construction de bateaux selon l'une quelconque des revendications 1 à 5,
**caractérisé en ce que**
l'élément de construction (05, 06) de bateaux, au moins dans certaines zones, comporte une surface avec une structure striée.

7. Élément de construction de bateaux selon l'une quelconque des revendications 1 à 6,
**caractérisé en ce que**
l'élément de construction (05, 06) de bateaux, au moins dans certaines zones, comporte une surface meulée.

8. Élément de construction de bateaux selon l'une quelconque des revendications 1 à 7,
**caractérisé en ce que**
la structure striée de l'élément de construction (05, 06) de bateaux correspond à la structure fibreuse du bois.

9. Élément de construction de bateaux selon l'une quelconque des revendications 1 à 8,
**caractérisé en ce que**
la structure striée de l'élément de construction (05, 06) de bateaux est enrobée d'une protection de surface, en particulier d'une couche de cire.

10. Élément de construction de bateaux selon l'une quelconque des revendications 1 à 9,
**caractérisé en ce qu'**
au moins un côté visible de l'élément de construction (05, 06) de bateaux comporte une surface externe qui est convexe.
